(19) Europäisches Patentamt

European Patent Office

Office européen des brevets

(11) EP 0 960 564 A1

(12) EUROPEAN PATENT APPLICATION

(43) Date of publication:
01.12.1999 Bulletin 1999/48

(51) Int. Cl.⁶: A01K 33/00

(21) Application number: 98870123.1

(22) Date of filing: 28.05.1998

(84) Designated Contracting States:
AT BE CH CY DE DK ES FI FR GB GR IE IT LI LU MC NL PT SE
Designated Extension States:
AL LT LV MK RO SI

(71) Applicant: Vanonckelen, Marc
3545 Halen (BE)

(72) Inventor: Vanonckelen, Marc
3545 Halen (BE)

(54) HATCHING EGG SIMULATION DEVICE

(57) This invention concerns the device to simulate a hatching egg, comprises a housing (8) with means (9) for generating on predetermined points of time a detectible vibration. These means contain preferably an integrated circuit (10) that switches in a pulsewise manner a relay (1) between two positions.

Drawing 2

EP 0 960 564 A1

**Description**

This invention describes the simulation of a hatching egg.

This device can be used in situations where the need occurs for a hatching egg , and this egg as such is not available. It seems that the flight of a pigeon can be accelerated by bringing the pigeon in contact with its own hatch before leaving. The movement of a chicken in the egg produces vibrations that are perceptible for the pigeon through the shell of the egg . These vibrations induce a mental stimulation for the pigeon. It also appears that the presence of a hatching egg can induce the production of soft food to feed the hatched youngsters.

Currently , whenever there is a need for a hatching egg for of a certain species , a substitute will be used when it is available.

This problem can also be solved by using a natural empty egg and by placing a movable object in this egg. The problem is that you will have to move the egg manually to produce the necessary vibrations for a long period.

The purpose of this invention is to provide a solution to solve this problem , to make a device that in the most natural way replaces this hatching egg.

In this invention it is being achieved by the use of a housing similar to the shell of an egg , with devices build in , that can reproduce the necessary vibrations on predefined timings. Since the vibrations are generated electronically there is no need to move the egg manually.

Surprisingly this device is capable to create a response that is similar to the response that is caused by natural breeding . Depending on frequence and amplitude , the vibrations can either be perceptibel or perceptibel and audible at the same time. By adjusting the frequence and amplitude of the vibrations to their natural level , it is possible to create an identical copy of the real hatching egg for different species .

Ornithologists will tend to solve this problem by using natural means capable to imitate or simulate a hatching egg , instead of using technical solutions .

To become a natural simulation of a hatching egg with regularly repeating vibrations, a pulsing device will be used.

According to the invention , the vibrations are engendered by a relay which is designed to switch between two positions. A relay has a very small volume , is unsuseptible to wear and tear and is for that reason perfect to fit in a small housing , such as an imitation egg. The switching of a relay will engender a vibration that seems to be the perfect imitation of a hatching egg.

In order to produce a periodicly reproducable switching between two positions , the relay will be connected with an oscillating Integrated Circuit , wich will generate a pulsating voltage signal that then will steer and switch the relay. This kind of integrated circuit connection takes up very little volume and fits in small housings.

This integrated circuit contains a power supply to produce the necessary voltage to a resistance , then a condensator can be loaded . This condensator will generate a block - wave from a pulsating voltage signal . this will steer and switch the relay between two positions . The condensator will upload to a first level , than produce a discharge . It will then reach a second level , after the second level this device will then be reloaded to the first level. The condensator will switch the relay during discharge , this will switch the relay from position 1 to postion 2 .

This type of switching requires a very little electric power and can easely be build in a small housing .

By altering the capacity of the condensator , the amplitude of the voltage wave can be changed . This allows influencing of the force provided by the switching of the relay and by that means the intensity of the vibrations . Different types of hatching eggs for various bird species can be simulated.

The integrated circuit will preferrably contain two resistances to determine the operating speed of the condensator . The second resistance determines the timeframe for the relay to switch .

The first and second resistance can be an adjustable potentiometer.

The invention is further documented with drawings and descriptions .

Drawing 1 is een schematic reproduction of a possible way to build this invention .
Drawing 2 shows in what way the integrated circuit en power supply can be build in the housing .

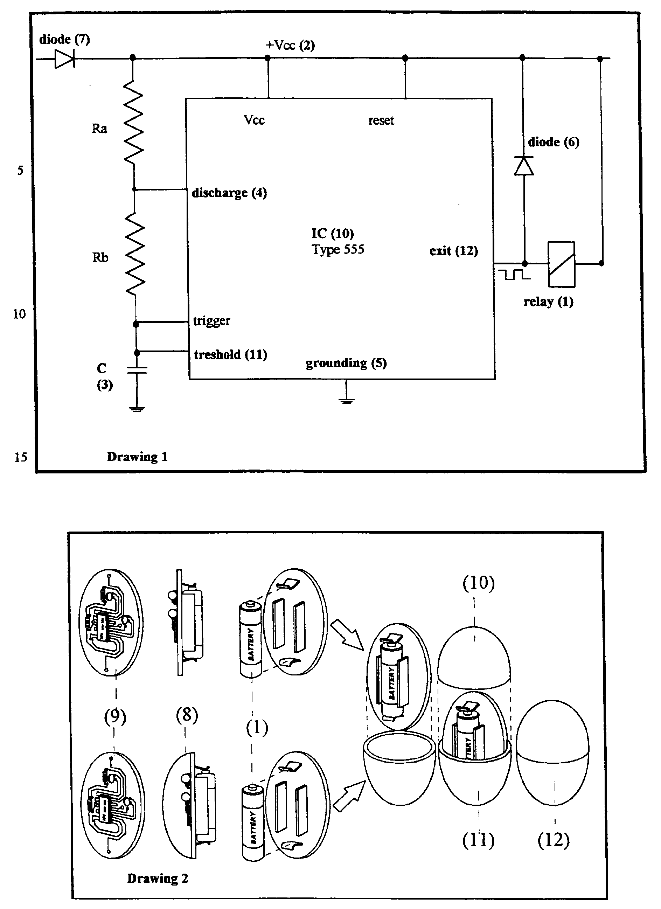

The device as shown in drawing 1 contains a relay 1 that is connected to an integrated circuit 10 of type 555 . This type 555 contains a power supply 2 that is connected to a first resistance Ra and a second resistance Rb for generating a voltage to charge condensator 3 . The sum of resistance a and resistance b determines the loading speed of condensator 3 .

When the power supply 2 is switched on , the condensator 3 is discharged . The integrated circuit 10 is being activated and the condensator 10 is loaded via resistances Ra and Rb . As soon as condensator 3 reaches a predetermined tension level ( for instance 2/3 of the power supply ) the treshold 11 , entrance of the integrated circuit 10 is being activated . Then condensator 3 will be discharged trough resistance Rb and discharge 4 , in the direction of grounding 5 , until it reaches a predetermined voltage over condensator 3 (for instance 1/3 of the power supply). The integrated circuit 10 will then be activated again to start loading the condensator 3 via resistances Ra and Rb .

In this way a pulsating varying voltage will reach the exit port 12 .

The voltage over the condensator 3 is fluctuating with a

period of

$$T= 0,693.C.(Ra +Rb) (s).$$

This voltage blockwave at exit port 12 of integrated circuit 10 is being used to switch and steer the relay 1 between two positions . The switching time of the relay = 0,693.Rb.C (s). The switching of the relay 1 causes a perceptible vibration that will surprisingly simulate the movement of the chickens in the egg .

It is preferable to place a diode 6 over the relay 1 to catch inductionvoltage of this relay . Diode 7 is will secure the polarisation of the power supply .

The sum of the resistances Ra and Rb determines the loading speed of the condensator 3 . The value of the resistances Ra and Rb is preferably adjustable in order to be able to steer the frequence ,the time and the intensity of the vibrations . This can be realised with the use of adjustable potentiometers or trimpotentiometers .

This entire electronical circuit will preferably be encased in plastic , this to become an orderly circuit . This is not a must .

The device can be equipped with a switch to turn it on and off , this can also be obtained by removing the power supply ( removing the battery from the housing ) . This simulator of a hatching egg is always available and requires no preparation , it is immediately operational .

Drawing 2 shows a possible design of the hatching egg simulator . This device is to be placed in a housing 8 , in this housing on a board 9 the integrated circuit . The entire device will be placed in a casing which simulates the shell of an egg 12 . The integrated circuit is connected to a replacable power supply 1 ( battery ).
The casing can be divided into two half shells 10 , 11 . The casing could be made out of plastic , plastic is corrosion and shockresistant .
Another advantage is that plastic is available in lots of colours ,and that during the molding a predifined motif can be added . In this way the eggs can be made very lifelike .

The shape , the size and the colour of the device are to be choosen in function of the shape , size and colour that they will have to match with ( species they will be used for ) .
This is not a necessity for the functionality as long as the species accepts the simulator and does not repels it from the nest . Also determinative for the acceptance of the simulator by the bird is the weight of the simulator . This can be influenced by material choice and by wallthickness .

## Claims

1.  Device for simulating a hatching egg which device comprises a housing, characterised in that mentioned housing comprises means for generating in that mentioned housing , a detectable vibration, at predetermined points of time .

2.  Device as claimed in claim 1, characterised in that mentioned means are provided for generating that above mentioned detectable vibration in a pulsewise manner.

3.  Device as claimed in claim 1 or 2, characterised in that mentioned means comprise a relay, Which is switchable between a first and a second position.

4.  Device as claimed in claim 3, characterised in that mentioned relay is connected to an Integrated Circuit, for generating a pulsed electric voltage for swithing the relay.

5.  Device as claimed in claim 4, characterised in that mentioned circuit comprises a power supply which is connected to a resistance for generating an electrical voltage for charching a capacitor to a predetermined first capacity, which capacitor is connected to the mentioned relay, which capacitor is provided for discharching to a second capacity when attaining mentioned first capacity and thereby swithing mentioned relay from the first to the second position, which resistance is provided for recharging the capacitor up to said first capacity.

6.  Device as claimed in claim 5, characterised in that mentioned Integrated Circuit comprises a first and a second resistor for determining the speed with which the capacitor is charged, and the second resistor is provided for determining the duration of the swithing the relay.

7.  Device as claimed in claim 6, characterised in that mentioned first and mentioned second resistor comprise an adjustable potentiometer.

8.  Device as claimed in any one at claims 1 to 7, characterised in that mentioned housing has the shape of an egg.

Drawing 1

Drawing 2

**European Patent Office**

**EUROPEAN SEARCH REPORT**

Application Number

EP 98 87 0123

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | BE 698 116 A (JUNIOR) 16 October 1967 <br> * the whole document * <br> --- | 1,2,8 | A01K33/00 |
| A | BE 492 524 A (DEWISPELAERE) <br> * the whole document * <br> ----- | 1,8 | |

TECHNICAL FIELDS SEARCHED (Int.Cl.6)

A01K

The present search report has been drawn up for all claims

| Place of search | Date of completion of the search | Examiner |
|---|---|---|
| THE HAGUE | 8 October 1998 | von Arx, V. |